# EUROPÄISCHE PATENTSCHRIFT

(11) **EP 1 830 247 B1**
(45) Veröffentlichungstag und Bekanntmachung des Hinweises auf die Patenterteilung: **24.12.2014**
(21) Anmeldenummer: 07004093.6
(22) Anmeldetag: 28.02.2007
(51) Int. Cl.: G06F 1/16, G06F 3/01, G06F 3/0481, G06F 3/0354, H04M 1/02, H04M 1/725

(54) **Bewegungssensitive Interaktion mit technischen Geräten**
Movement sensitive interaction with technical devices
Interaction sensible au mouvement avec des appareils techniques

(30) Priorität: 03.03.2006 DE 102006009877
(43) Veröffentlichungstag der Anmeldung: 05.09.2007
(73) Patentinhaber: Deutsche Telekom AG, 53113 Bonn (DE)
(72) Erfinder: Marterer, Rainer, 95469 Speichersdorf (DE)
(74) Vertreter: Riebling, Peter

(56) Entgegenhaltungen:
- EP-A2- 0 692 899
- WO-A-03/060816
- WO-A-2004/088488
- WO-A1-99/32960
- CA-A1- 2 492 953
- DE-A1- 3 604 543
- US-A1- 2002 198 030
- US-A1- 2006 040 712

## Beschreibung

Die Erfindung betrifft eine Vorrichtung und ein mit der Vorrichtung verwendetes Verfahren zur direkten bewegungsintensiven Interaktion mit technischen Geräten, vorzugsweise einer Multimediamaus in Multimediawebinhalten gemäß dem Oberbegriff des Patentanspruches 1.

Derzeit gestaltet sich die Bedienung von technischen Geräten aller Art oft als schwierig, da dem Anwender zur Ausführung einer einzelnen Funktion des Gerätes eine Vielzahl einzelner Menüpunkte zur Verfügung stehen, welche mittels aufwendiger und komplizierter Tastenfolgen zur Interaktion des Gerätes ausgewählt werden müssen.

Hierbei wird deutlich, dass ein technisches Gerät mit mehreren Funktionen ebenso eine Vielzahl von frei wählbaren Kombinationen von Einzelfunktionen zur Ausführung eines kompletten Funktionsmenüs aufweist, welche vorzugsweise über die Eingabe von einzelnen Bedienungstasten am Gerät vorgegeben werden.

Als ein aus dem Stand der Technik bekanntes technisches Gerät ist hier zum Beispiel die Funktion eines Mobilfunkgerätes (Handy) zu nennen.
Aufgrund der hohen Varianz von unterschiedlichen Funktionen, wie zum Beispiel Telefonie, versenden von SMS (Short Message Services), Terminplanung und/oder Bildaufnahmen ist der Anwender aufgefordert, die jeweilige Funktion vor seiner Nutzung auszuwählen und seinen Wünschen und Bedürfnissen anzupassen. Durch Eingabe einzelner Konfigurationspunkte durch die jeweils entsprechende Tastenfunktion wird die entsprechende Funktion anhand eines vorgegebenen Menüs gewählt und angepasst.

In einer noch aufwendigeren Art und Weise ist diese Varianz von Funktionen in einem UMTS (Universal Mobile Telecommunications System) - fähigen Mobilfunkgerät (Handy) festzustellen.

Diese Wirkungsweise soll beispielhaft an einem UMTS-fähigen Handy beschrieben werden.

Bei der Benutzung eines UMTS- fähigen Handys ist festzustellen, dass die Bedienung sowie die Konfiguration des Handys durch vorgegebene Menüs, welche mittels Tastenfunktionen gewählt werden, relativ umständlich mit einer relativ langen Zeitdauer und teilweise für den Anwender relativ verwirrende Tastenfolge des Handys erfolgt.

Ein derartiges UMTS - fähiges Handy verfügt über eine relativ hohe Anzahl von Funktionen, wie zum Beispiel das "web-browsing", welches über ein Auswahlmenü der integrierten Software angewählt und/oder konfiguriert wird, wobei nach entsprechender Konfiguration des Menüs durch entsprechende Bedienung (Tastenfolge) der Tastatur der Zugang zum Internet gestartet wird.

Darüber hinaus gestalten weitere aktuelle Mobilfunkgeräte die Benutzung hochbitratiger Web-Angebote für den Anwender relativ schwierig, da die anzeigenden Displays oft zu klein sind und deren Bedienung, wie zum Beispiel das sogenannte "scrollen" zur Darstellung der gesamten Webinhalte der geöffneten Internetseite lediglich mit einem zusätzlichen Bedienungshilfsmittel zu bedienen ist, wie zum Beispiel mit einem Griffel (pen) oder dergleichen, wie zum Beispiel bei einem Mobile Digital Assistant (MDA).

Hierbei ist darauf hinzuweisen, dass ein MDA ein PDA (Personal Digital Assistant) mit einem integrierten Mobilfunkgerät ist, wobei derartige MDA's auch für die mobile Navigation von Fahrzeugen oder Personen verwendet werden können.

In derartigen UMTS-fähigen Handys ist der Bildinhalt einer geöffneten Internetseite auf dem Display des Handys lediglich teilweise dargestellt, so dass eine Verschiebung des dargestellten Bildausschnittes notwendig ist, um den gesamten Seiteninhalt der Internetseite einzusehen, wobei eine Verschiebung des dargestellten Bildausschnittes ebenfalls durch eine Tastenfolge auf der Tastatur des Handys ausgeführt werden kann.

Durch die Anwendung einer erfindungsgemäßen interaktiven Kommunikation eines technischen Gerätes, wie zum Beispiel eines UMTS - fähigen Handys liegt der wesentliche Vorteil darin, dass die Benutzerfreundlichkeit derartiger UMTS-fähigen Handys deutlich gesteigert wird.

Mit der Druckschrift US 2002/198030 A1 wird ein Verfahren zur Ausführung einer bewegungssensitiven Interaktion mit technischen Geräten offenbart, wobei das technische Gerät einen Bewegungssensor aufweist, welcher Bewegungen des technischen Gerätes auf einer Ebenen Fläche erfasst und mittels einer integrierten Software in Steuerinformationen umwandelt, wobei die Steuerinformationen einen direkten bewegungssensitive Interaktion mit dem technischen Gerät ausbilden, welche eine visuelle Menüsteuerung oder ein visuelles Navigieren in Dokumenten oder Internetseiten ausführt.
Dieser Druckschrift ist nicht zu entnehmen, dass die Software zur Ausführung der bewegungssensitiven Interaktion Funktionen aufweist, welche vom Bediener frei konfigurierbar sind.

Mit der Druckschrift WO 2004/088488 A2 wird eine elektronische Vorrichtung mit einem Ober- und Unterteil offenbart und mit einer Steuerung für einen Positionszeiger (Cursor) oder eine Bewegungssteuerung für einen Mauszeiger , wobei das Oberteil ein Display aufweist und das Unterteil eine Rollkugel zur bewegungssensitiven Interaktion der elektrischen Vorrichtung aufweist, die zur Auswahl eines auf dem Display angezeigten Menüs verwendet wird.
Diese Druckschrift zeigt keine manuelle Auswahl und Eingabe von Funktionen bei der bewegungssensitiven Interaktion eines technischen Gerätes über angeordnete Maustasten und/oder einem angeordneten Scrollrad.

Mit der Druckschrift US 2006/0040712 A1 wird eine Kommunikationsvorrichtung offenbart, die als Zeigegerätvorrichtung geeignet ist und eine Kameraanordnung zur Abtastung von Bewegungen mit Bezug zu einer Oberfläche oder der Bewegung eines Benutzerfingers über der Kameraanordnung aufweist und die Vorrichtung als optische Maus oder Rollkugel-Maus zur Steuerung von Funktionen eines Computers ausbildet.

Dieser Druckschrift ist nicht zu entnehmen, dass die Software zur Ausführung der bewegungssensitiven Interaktion frei vom Benutzer konfigurierbare Funktionen aufweist.

Mit der Druckschrift WO 03/060816 A wird eine elektronische Vorrichtung offenbart, welche als Zeigevorrichtung verwendbar ist, wobei die Vorrichtung integrierte Zeige-Komponenten aufweist, welche zur Zusammenarbeit mit einem externen Bildschirm geeignet sind.
Dieser Druckschrift sind weitere, mit der Erfindung vergleichbare Merkmale nicht zu entnehmen.

Mit der Druckschrift DE 36 04 543 A1 wird eine Positionseingabevorrichtung offenbart, welche eine verbesserte Rollwirkung einer in der Bodenfläche angeordneten Kugel aufweist.
Diese Druckschrift offenbart keine Vorrichtung, welche zu einer bewegungssensitiven Interaktion mit technischen Geräten ausgebildet ist.

Mit der Druckschrift CA 2 492 953 A1 wird eine Mobilfunkvorrichtung offenbart, welche als optischer Sensor verwendbar ist und ein Mauszeigersystem zur Menüführung und inhaltlichen Suche aufweist, mit einem Computer verbindbar ist und den Computer-Mauszeiger unter Verwendung des optischen Sensors steuert, wobei ein extern projiziertes Mauszeigersystem unter Verwendung einer Videoerkennung zur Steuerung des Computermauszeigers auf dem Projektorbildschirm ausgebildet ist.
Diese Erfindung weist den Nachteil auf, dass frei vom Bediener konfigurierbare Funktionen zur Ausführung einer entsprechenden Software dieser nicht zu entnehmen sind.

Die Aufgabenstellung der Erfindung liegt demnach darin, ein in einfachster Weise zu bewegendes, technisches Gerät mit menügesteuerten Funktionen derart weiterzubilden, dass die Funktionen eines Menüs in einfachster Weise ausgewählt und ausgeführt werden.

Zur Lösung der Aufgabe ist die Erfindung durch die Merkmalskombinationen der unabhängigen Patentansprüche 1 und 10 gekennzeichnet.

Wichtig ist hierbei, dass das technische Gerät aufgrund seiner Abmessungen und seines Eigengewichtes durch den Bediener relativ leicht zu Bewegen ist, wobei die auszuführende Funktion des zu bedienenden Gerätes durch die bewegungssensitive Interaktion des Gerätes ausgewählt, konfiguriert und ausgeführt wird.

Im weiteren Verlauf dieser Anmeldung wird der Gegenstand der Erfindung beispielhaft an einem technischen Gerät beschrieben, welches die Ausführung und Konfiguration verschiedenartiger Funktionen in einfachster Weise ausführt.

Ein derartiges technisches Gerät, welches die vorbenannten Voraussetzungen erfüllen sollte, um die Bedienung verschiedenartiger Funktionen wesentlich zu erleichtern ist zum Beispiel eine Multimediamaus zur Ausführung von zum Beispiel Funktionen bei geöffneten Internetseiten eines geöffneten Programms.

In einer erfindungsgemäßen Ausführungsform ist eine Multimediamaus als optische Maus ausgebildet, welche die aus dem Stand der Technik bekannten Tastenanordnungen (Linke Maustaste / Rechte Maustaste / seitliche Maustaste Links / seitliche Maustaste Rechts / Scrollrad) aufweist.

Die Multimediamaus, im weiteren Verlauf der Anmeldung auch als "Maus" bezeichnet, ist mit einem zweigeteilten Gehäuse ausgeführt, wobei das Unterteil des Gehäuses als Display mit einem fest positionierten Mauszeiger oder Fangkreuz ausgeführt ist.

Das Oberteil ist der Form des Unterteils des Gehäuses angepasst und verfügt über die Bekannten Funktionen einer Multimediamaus.

Wird das Unterteil über einen Klappmechanismus nach oben aufgeklappt, so wird über einen entsprechenden Kontakt die Funktion des dann sichtbaren Displays in dem Unterteil aktiviert und eine direkte Kommunikation zwischen einer geöffneten Internetseite und der Maus findet statt.
Dies bedeutet, dass sich durch die Bewegung der Maus auf einer ebenen Fläche der dargestellte Bildausschnitt von Internetseiten mit relativ großen Web- oder Dokumenteninhalten synchron ändert.
Wird die Maus nach rechts bewegt, so wird der rechtsliegende Bild- oder Dokumentenausschnitt der dargestellten Internet- oder Dokumentenseite dargestellt.
Entsprechend ist eine synchrone Darstellung des Bild- oder Dokumentenausschnittes je nach Bewegungsrichtung der Maus gewährleistet.

Dies hat den wesentlichen Vorteil, dass zum Beispiel bei der Darstellung eines Stadtplanes im Internet die Bildausschnitte der Vororte oder benachbarter Städte durch die Bewegung der Multimediamaus in die entsprechende Richtung dargestellt werden, ohne vorheriges Verkleinern der Gesamtdarstellung. Selbstverständlich sind weitere Darstellungs- und Bearbeitungsfunktionen eines Bild- oder Dokumentenausschnittes über eine entsprechend eingegebene Software darzustellen und zu bearbeiten.

Hierbei wird zum Beispiel durch Drücken einer der Maustasten oder des Scrollrades ein Menü geöffnet, wobei die einzelnen Menüfunktionen über sich Öffnende Menüleisten ausgewählt werden, und falls erforderlich, sich in seitlich weiter öffnenden Menüleisten verzweigen, bis die gewünschte Funktion als Menüpunkt auf der Menüleiste im Display erscheint und mit einer von der Software zugeordneten Maustaste durch Betätigung ausgeführt wird.
Diese Vorgehensweise einer menügesteuerten Bild- oder Dokumentenbearbeitung ist zum Beispiel aus der dem Stand der Technik bekannten Textverarbeitungs-Software "Word" von Microsoft ersichtlich.
Ein Vergrößern oder Verkleinern des dargestellten Bildausschnittes wird zum Beispiel durch Drehen des Scrollrades in die entsprechende Drehrichtung ausgeführt.
Es sind jedoch auch andere Tastaturbelegungen für eine derartige Funktion, oder ein Ausführen dieser Funktion durch Menüauswahl möglich.

Für eine Programmierung von einzelnen Funktionen eines Bedienungsmenüs sind alle bisher bekannten und/oder zukünftigen Funktion zur Interaktion für bewegungsintensive technische Geräte geeignet.

Eine weitere Ausführungsform einer bewegungssensitiven Interaktion eines technischen Gerätes ist für ein UMTS-fähiges Handy vorgesehen.

So ist eine derartige, bewegungssensitive Interaktion in technischen Geräten zu integrieren, welche zum Beispiel als Multimediamaus oder als Handy bereits bekannt sind.

Damit der Anwender mit zum Beispiel einem UMTS-fähigen Handy eine interaktive Kommunikationen ausführen kann, ist es in einer weiteren Ausführungsform der Erfindung vorgesehen, dass an dem technischen Gerät, hier einem UMTS - fähigen Handy, auf der Unterseite des Gehäuses ein Sensor integriert ist, welcher Bewegungen des Gerätes auf einer ebenen Fläche erfasst und in Steuerinformationen umwandelt. Diese Funktion ist ähnlich einer optischen Maus, jedoch direkt im Gerät integriert.

Durch die Integration eines oder mehrerer entsprechender Sensoren in die Gehäuseunterseite wird eine Interaktion bei Bewegungsänderungen der Multimediamaus mit dieser ausgeführt.

Da sich an der Unterseite auch die äußere Kamera befindet, ist es in einer weiteren Ausführungsform vorgesehen, diese Funktionalität softwaremäßig zu erzeugen oder den Sensor in die Kamera zu integrieren.

Dies führt beim Nutzer zu einer intuitiven (durch Eingebung erfassende) Bedienung, da inzwischen ein Großteil der Bevölkerung mit der Bedienung von zum Beispiel einem Personal Computer (PC) vertraut ist.

Die Bedieneroberfläche bleibt in ihrer Ausgestaltung gleich.

Jedoch ist das Erreichen der einzelnen Menüs nicht mehr durch Betätigung von Tasten vorgesehen, wie zum Beispiel mit den Tasten links, rechts, hoch, tief, linkes Menü, rechtes Menü oder gar Zahl, sondern allein durch die Bewegung des Gerätes.

Dabei ist der Blickwinkel und der Bewegungsablauf bei einem Klapphandy als besonders ergonomisch zu bezeichnen.
Es ist nur eine Taste zur Auswahl des durch vorherige Bewegung angesteuerten) gewünschten Menüpunktes aktiv.
Diese Taste kann sich wie gewohnt auf der Tastatur befinden.

Es ist technisch auch möglich eine Tastenfunktionalität durch Druck auf das Gerät mittels einem integrierten Mikroschalter an der Unterseite des Gerätes zu erzeugen.

Dabei handelt es sich um die Verknüpfung von zwei oder mehr Elementen oder Bestandteilen, vorzugsweise eines technischen Gerätes mit den Funktionen eines UMTS-fähigen Handys zu einer neuen Einheit.

Diese vorbenannte Ausführungsform weist eine deutliche Verbesserung bei nur minimaler Änderung eines technischen Gerätes, wie zum Beispiel einem UMTS - fähigen Handys auf.

Durch die Integration eines oder mehrerer Sensoren in ein technisches Gerät ist es möglich durch Bewegungsänderungen des Gerätes mit dem Gerät in Interaktion zu treten.

Aufgrund der bewegungssensitiven Interaktion eines beweglichen, technischen Gerätes wird durch dessen Bewegung ein kommunizieren realisiert, um komplizierte Eingaben zu erleichtern.

Derartige Funktionen sind ebenfalls zur Programmierung eines DVD-Recorders über eine Fernbedienung zu verwenden, welche diese Funktionalität in Verbindung mit einem angepassten Display aufweist.
Vorteilhaft ist ebenfalls die Integration der bewegungssensitiven Interaktion in einem UMTS-fähigen Handy, da diese bereits über einen Fotosensor zur Erfassung von Bildern und einem entsprechenden Display verfügen.
Wir zum Beispiel auf der Gehäuseunterseite eines derartigen Handys zusätzlich ein Bewegungssensor integriert, ist dieser für Bildbearbeitungsfunktionen zu verwenden, wie zum Beispiel das Verschieben nach lins/rechts/oben/unten einer geöffneten Internetseite mit großen Webinhalten oder einer erfassten Dokumentenseite mit großen Dokumenteninhalt.

Zusätzlich wird der vorbenannte Bewegungssensor ebenfalls zur Auswahl einer Funktion in einem aktivierten Kontextmenü verwendet, wobei das Kontaktmenü mittel Betätigung einer definierten Taste oder Scrollrad aufgerufen und auf dem Display dargestellt wird.

Darüber hinaus ist generell die Bedienung eines derartigen Handys über einen integrierten Bewegungssensor möglich, wobei mittels Betätigung einer definierten Handytaste auf der Handy-Tastatur der Bewegungssensor aktiviert und ein Kontextmenü auf dem Display dargestellt wird. Durch Bewegung des Handys auf einer ebenen Fläche wird die erfasste Bewegung zur Auswahl einer Funktion aus dem Kontextmenü verwendet. Eine weitere Betätigung der Handytaste führt dann die vorher gewählte Funktion aus.

Der Formgebung und der Programmierung des jeweiligen Gerätes für eine interaktive Bewegung, zur Darstellung von Dokumenten- und/oder Multimediawebinhalten sind dabei keine Grenzen gesetzt.

Darüber hinaus ist es vorgesehen, dass die erfindungsgemäße Multimediamaus als eine Kabelverbindung aufweisende oder als eine Funk aufweisende Multimediamaus ausgebildet ist, wobei die Bewegungen der Multimediamaus auf einer ebenen vorzugsweise optisch (Laser) erfasst werden.

Die Erfindung soll jedoch nicht auf die bewegungssensitive Interaktion mit einer Multimediamaus beschränkt sein. Vielmehr werden alle in einfachster Weise bewegbaren technischen Geräte mit mehreren Funktionen und/oder Menüpunkten, welche mit einer derartigen bewegungssensitiven Interaktion ausgestattet werden können beansprucht.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1: eine Seitenansicht einer geschlossenen Multimediamaus für eine bewegungssensitive Interaktion
- Figur 2: eine Seitenansicht einer geöffneten Multimediamaus für eine bewegungssensitiven Interaktion
- Figur 3: eine Draufsicht einer geöffneten Multimediamaus für eine bewegungssensitive Interaktion mit Maustasten und Display
- Figur 4: eine Draufsicht des Oberteils einer Multimediamaus von unten mit integriertem Bewegungs- und Fotosensor

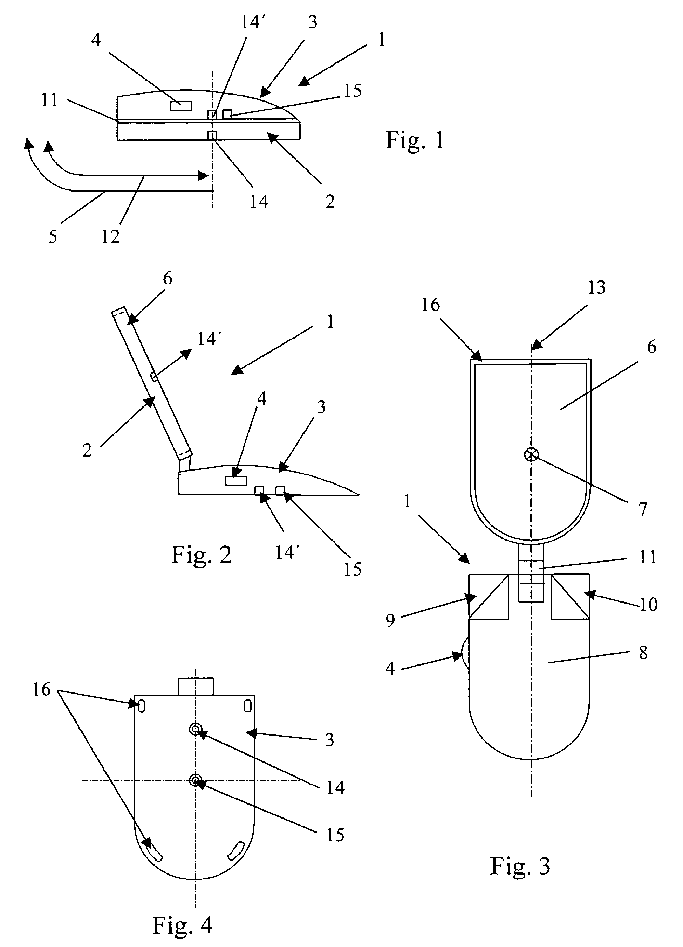

Die in Figur 1 dargestellte Multimediamaus 1 zeigt eine aus dem Stand der Technik bekannte Multimediamaus dar, wobei das Gehäuse eine horizontale Unterteilung aufweist, welche das Gehäuse in ein Unterteil 2 und ein Oberteil 3 unterteilt.

Das Unterteil 2 und Oberteil 3 ist mittels einem drehbar gelagerten Klappmechanismus 11 an einem Ende der Multimediamaus 1 miteinander verbunden, wobei der Klappmechanismus eine Sicherung gegen unbeabsichtigtes Öffnen der Multimediamaus 1 aufweist.

Wird zum Beispiel das Oberteil 3 gegen das Unterteil 2 im geschlossenen Zustand quer zur axialen Längserstreckung 13 der Multimediamaus 1 verschoben, so wird eine mechanische Sicherung entriegelt und das Unterteil 2 lässt sich in Bewegungsrichtung 5 Öffnen.

Zum Schließen in Bewegungsrichtung 12 wird die Multimediamaus 1 in umgekehrter Reihenfolge zur Bewegungsrichtung 5 bewegt und in Ihrer Gegenüberstellung des und Unter- und Oberteils 2, 3 gegeneinander verschoben.

Es sind jedoch auch alle anderen mechanischen Sicherungen gegen unbeabsichtigtes Öffnen derartiger technischer Geräte möglich, welche hiermit erfindungsgemäß beansprucht werden.

Darüber hinaus weist das Unterteil 2 auf seiner zur ebenen Fläche weisenden Oberfläche einen Bewegungssensor 14' zur Erfassung von Bewegungen der Multimediamaus 1 im ihrem geschlossenen Zustand auf, welcher bei geöffneter Multimediamaus 1 deaktiviert ist, wobei die Bewegungssensorik mittels dem integrierten Bewegungssensor 14 auf der unteren Oberfläche des Oberteils 3 übernommen wird.

Das Oberteil weist an seiner Seitenfläche ein Scrollrad 4 auf, welches gemäß dem Stand der Technik zur Ausführung von vordefinierten Funktionen in einer dargestellten Dokumenten- oder Internetseite mit relativ großen Inhalten ausgebildet ist.

In Figur 2 ist eine erfindungsgemäße Multimediamaus 1 dargestellt, welche sich in Ihrem entriegelten Sicherungszustand des Klappmechanismus 11 befindet und einen geöffneten Zustand aufweist.

Bei derartiger Stellung des Oberteils 3 wird zur bereits vorhandenen mechanischen Entriegelung einer Sicherung des Unter- und Oberteils 2, 3 ein elektrischer Kontakt geschlossen, welcher eine Einschaltfunktion eines integrierten Displays 6 im Unterteil ausführt, wobei die auszuführenden Funktion zur Bedienung und Konfiguration von Dokumenten- und Webinhalten einer geöffneten Internetseite nunmehr mittels bewegungssensitiver Interaktion menügesteuert ausgeführt werden.

Die in Figur 3 dargestellte Multimediamaus 1 zeigt auf der Oberseite des Oberteils 3 jeweils eine Linke und Rechte Maustaste 9, 10, welche bei geschlossener Multimediamaus 1 lediglich die aus dem Stand der Technik bekannten Funktionen einer Multimediamaus 1 ausführen.

Für eine verbesserte Handhabung der Multimediamaus 1 im geöffneten Zustand ist das Scrollrad 4 zur Bedienung auf der linken Seitenfläche des Oberteils 3 in axialer Längserstreckung der Multimediamaus angeordnet, um diese mit dem Daumen des Bedieners zu drehen, wenn die Multimediamaus 1 von dessen Hand umgriffen wird.

Für eine erweiterte Bedienung der Multimediamaus 1 ist es vorgesehen, die Maustasten 9, 10 auf der Oberseite der Multimediamaus in einer geteilten Ausführung auszubilden, welche jeweils unabhängig voneinander mit verschiedenen Funktionen belegt werden können.

In einer zwischen den Maustasten 9, 10 liegenden Anordnung ist der Klappmechanismus 11 zum Öffnen und Schließen der Multimediamaus 1 angeordnet, wobei dieser eine mechanische Sicherung gegen unbeabsichtigtes Öffnen und Schließen der Multimediamaus 1 aufweist, welche entsichert ist, wenn zum Beispiel das Unterteil 2 gegen das Oberteil 3 im geschlossenen Zustand quer zur axialen Längserstreckung 13 der Multimediamaus 1 nach Links oder Rechts verschoben wird.

Nach der Entriegelung der mechanischen Sicherung lässt sich das Unterteil 2 mit Bezug auf das Oberteil 3 in die Bewegungsrichtungen 5, 12 nach vorne oder nach hinten drehen.

Im geöffneten Zustand der Multimediamaus 1 ist die Funktion des Unterteils 2 der Multimediamaus 1 als Display 6 freigegeben, wobei das Einschalten des Displays 6 mittels einem angeordneten Kontaktschalter ausgeführt wird, welcher beim Öffnen der Multimediamaus 1 eine Kontakt schließt und das Display 6 einschaltet. Zusätzlich wird mittels dem angeordneten Kontaktschalter neben der aktivierten Funktion des Bewegungssensors die Funktion des Fotosensors 15 aktiviert, um eine Bilddarstellung auf dem eingeschalteten Display 6 der Multimediamaus 1 des erfassten Bildes vorzunehmen.

Auf dem Display 6 ist ein Mauszeiger beziehungsweise ein Fangkreuz 7 angeordnet, welches eine feste Position aufweist, die vorzugsweise in mittiger Anordnung der Displayfläche liegt.

Bei der Bewegung der Multimediamaus 1 bleibt der/das Mauszeiger/Fangkreuz 7 in fixer Position, wobei die erfasste Bilddarstellung der Website oder des Dokumentes sich je nach Bewegungsrichtung der Multimediamaus 1 nach links/rechts/oben oder unten verschiebt.

Der Kontaktschalter ist an einer frei wählbaren Anordnung der Multimediamaus angeordnet, welcher gewährleistet, dass das Display beim Öffnen der Multimediamaus 1 seine Einschaltfunktion aufnimmt bzw. beim Schließen der Multimediamaus abgeschaltet wird.

Wird die geöffnete Multimediamaus 1 zum Beispiel über ein Dokument geführt, so wird mittels dem Fotosensor 15 das aktuelle Bild erfasst und auf dem eingeschalteten Display 6 dargestellt. Durch Betätigung einer der Maustasten 9, 10 wird auf dem Display 6 ein Kontextmenü geöffnet, welches definierte Bildbearbeitungsfunktionen, wie zum Beispiel "zoomen", "ausschneiden" oder dergleichen zur Auswahl darstellt. Durch Bewegen der Multimediamaus 1 auf der ebenen Fläche wird mittels des Bewegungssensors 14 diese erfasst, wobei im Display 6 diese Bewegung der Multimediamaus 1 die entsprechende Funktion im visuell dargestellten Kontextmenü anzeigt. Durch erneutes Betätigen einer der Maustasten 9, 10 wird die angezeigte Funktion im Kontextmenü ausgeführt.

Derartige Funktionen können in beliebiger Anzahl wiederholt werden, wobei die Funktionsbelegung der entsprechenden Maustasten 9, 10 und/oder des Scrollrades 4 vom Bediener mittels entsprechender Software frei wählbar ausgebildet sind.

Die in Figur 4 dargestellte Unterseite des Oberteils 3 der Multimediamaus 1 ist im äußeren Bereich mit Gleitflächen ausgebildet, welche ein gleitfähiges Material, wie zum Beispiel Teflon aufweisen und eine leichtes Gleiten der erfindungsgemäßen Multimediamaus 1 auf einer ebenen Fläche gewährleisten und an beliebiger Stelle und mit beliebigen Abmessungen angeordnet sind.

Zusätzlich weist das Oberteil 3 auf seiner Unterseite einen mittig zur axialen Längserstreckung 13 angeordneten Fotosensor 15 und einen zweiten Bewegungssensor 14' auf, wobei der Fotosensor 15 zur Erfassung von Bilddaten in Dokumenteninhalten und der Bewegungssensor 14' zur Bewegungserfassung der Multimediamaus 1 auf einer ebenen Fläche ausgebildet ist.

Der Bewegungssensor 14' ist lediglich bei geöffneter Multimediamaus aktiviert; und die Anordnung der beiden Sensoren 14', 15 ist frei wählbar.

Wird die Multimediamaus 1 in ihrem geschlossenen Zustand verwendet, so weist diese die aus dem Stand der Technik bekannten Funktionen einer Multimediamaus 1 auf, wobei die Funktionsbelegung der einzelnen Maustasten 9, 10 und Scrollrad 4 frei wählbar ausgebildet ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Bezugszeichenliste

- 1.: Multimediamaus
- 2.: Unterteil
- 3.: Oberteil
- 4.: Scrollrad
- 5.: Bewegungsrichtung "Öffnen"
- 6.: Display
- 7.: Mauszeiger/Fangkreuz
- 8.: Maus
- 9.: Maustaste, links
- 10.: Maustaste, rechts
- 11.: Klappmechanismus
- 12.: Bewegungsrichtung "Schließen"
- 13.: axiale Längserstreckung
- 14.: Bewegungssensor
- 15.: Fotosensor
- 16.: Gleitfläche

## Patentansprüche

1. Verfahren zur Ausführung einer bewegungssensitiven Interaktion mit einem technischen Gerät (1) in Form einer Multimediamaus und/oder eines UMTS-fähigen Mobilfunkgerätes, wobei Bewegungen des technischen Gerätes (1) auf einer ebenen Fläche durch einen Bewegungssensor (14, 14') erfasst und mittels einer integrierten Software in Steuerinformationen umgewandelt werden, wobei die Steuerinformationen eine direkte bewegungssensitive Interaktion mit dem technischen Gerät (1) ausbilden, welche eine auf einem Display (6) dargestellte visuelle Menüsteuerung und/oder mittels des Displays (6) ein visuelles Navigieren in Dokumenten oder Internetseiten mit Dokumenten- und/oder Webinhalten ausführt, wobei das technische Gerät ein geteiltes Gehäuse aufweist, welches ein Oberteil (3) und ein Unterteil (2) ausbildet, wobei das Unterteil (2) das Display (6) umfasst, **dadurch gekennzeichnet,**
**dass** sich an der Unterseite des Geräts (1) ein Fotosensor (15) befindet,
**dass** der Bewegungssensor (14, 14') in den Fotosensor (15) integriert ist,
**dass** der Bewegungssensor (14, 14') lediglich bei geöffneter Multimediamaus aktiviert ist
und **dass**, wenn die Multimediamaus (1) über ein Dokument geführt wird, der Fotosensor (15) das aktuelle Bild erfasst und auf dem eingeschalteten Display darstellt,
**dass** auf dem Display (6) ein fest positionierter Mauszeiger (7) oder Fangkreuz dargestellt wird, wobei bei einer Bewegung des technischen Geräts der Mauszeiger /Fangkreuz (7) in einer fixen Position verbleibt, während sich die Darstellung auf dem Display (6) je nach Bewegungsrichtung verschiebt,
und **dass** eine Auswahlbestätigung eines geöffneten Kontextmenüs oder andere Funktionen mittels eines Drucksensors durch Drücken des technischen Geräts auf einer Fläche erfolgt.

2. Verfahren nach Anspruch 1, **dadurch gekennzeichnet, dass** die bewegungssensitive Interaktion beim Navigieren einen Ausschnitt eines Dokumentes oder einer Webseite auf einem Display (6) darstellt, welcher durch die Bewegung des technischen Gerätes entsprechend verschoben dargestellt wird.

3. Verfahren nach Anspruch 1 und 2, **dadurch gekennzeichnet, dass** die bewegungssensitive Interaktion ein Kontextmenü zur Auswahl verschiedener Gerätefunktionen auf dem Display (6) darstellt.

4. Verfahren nach den Ansprüchen 1 bis 3, **dadurch gekennzeichnet, dass** die bewegungssensitive Interaktion ein Kontextmenü zur Auswahl verschiedener Gerätefunktionen und/oder Bearbeitungsfunktionen eines dargestellten Ausschnittes eines Dokumentes oder einer Webseite auf dem Display (6) darstellt.

5. Verfahren nach den Ansprüchen 1 bis 4, **dadurch gekennzeichnet, dass** Auswahl von Funktionen im dargestellten Kontextmenü oder die Bearbeitungsfunktionen des dargestellten Ausschnittes eines Dokumentes oder einer Webseite mittels Erfassung einer Bewegung des technischen Gerätes ausgeführt wird.

6. Verfahren nach den Ansprüchen 1 bis 5, **dadurch gekennzeichnet, dass** die Auswahl und die Ausführung der Funktionen im dargestellten Kontextmenü und/oder der Bearbeitungsfunktionen des erfassten und dargestellten Bildausschnittes auf dem Display (6) mittels einer Kombination aus Bewegungserfassung und manueller Eingabe über eine angeordnete Tastatur erfolgt.

7. Verfahren nach den Ansprüchen 1 bis 6, **dadurch gekennzeichnet, dass** die manuelle Auswahl und Eingabe von Funktionen bei der bewegungssensitiven Interaktion mit dem technischen Gerät (1) mittels angeordneter Maustasten (9, 10) und/oder einem angeordneten Scrollrad (4) erfolgt.

8. Verfahren nach den Ansprüchen 1 bis 7, **dadurch gekennzeichnet, dass** die manuelle Auswahl und Eingabe von Funktionen bei der bewegungssensitiven Interaktion mit dem technischen Gerät (1) mittels angeordneter Tastatur am oder im technischen Gerät ausgeführt ist.

9. Verfahren nach den Ansprüchen 1 bis 8, **dadurch gekennzeichnet, dass** die Software zur Ausführung der bewegungssensitiven Interaktion in dem technischen Gerät (1) integriert ist und dessen Funktionen vom Bediener frei konfigurierbar sind.

10. Technisches Gerät (1) mit Einrichtungen zur Ausführung einer bewegungssensitiven Interaktion, wobei das technische Gerät als eine Multimediamaus und/oder ein UMTS-fähiges Mobilfunkgerät ausgebildet ist und einen Bewegungssensor (14, 14') aufweist, welcher Bewegungen des technischen Gerätes (1) auf einer ebenen Fläche erfasst und mittels einer integrierten Software in Steuerinformationen umgewandelt werden, wobei das technische Gerät ein geteiltes Gehäuse aufweist, welches ein Oberteil (3) und ein Unterteil (2) ausbildet, wobei das Unterteil (2) das Display (6) umfasst, das einen Mauszeiger / Fangkreuz (7) mittig auf der axialen Längserstreckung (13) des technischen Geräts (1) aufweist, und das Oberteil (3) mindestens zwei Maustasten (9, 10) aufweist, welche Funktionen für eine bewegungssensitive Interaktion und Funktionen ausbilden, **dadurch gekennzeichnet, dass**
sich an der Unterseite des Geräts (1) ein Fotosensor (15) befindet,
dass der Bewegungssensor (14, 14') in den Fotosensor (15) integriert ist,
dass der Bewegungssensor (14, 14') lediglich bei geöffneter Multimediamaus aktiviert ist, derart ausgestaltet
dass, wenn die Multimediamaus (1) über ein Dokument geführt wird, der Fotosensor (15) das aktuelle Bild erfasst und auf dem eingeschalteten Display darstellt,
dass auf dem Display (6) ein fest positionierter Mauszeiger (7) oder Fangkreuz dargestellt wird, wobei bei einer Bewegung des technischen Geräts der Mauszeiger /Fangkreuz (7) in einer fixen Position verbleibt, während sich die Darstellung auf dem Display (6) je nach Bewegungsrichtung verschiebt,
und dass ein Drucksensor vorhanden ist, welcher eine Auswahlbestätigung eines geöffneten Kontextmenüs oder andere Funktionen durch Drücken des technischen Geräts auf einer Fläche ausbildet.

11. Vorrichtung nach Anspruch 10, **dadurch gekennzeichnet, dass** das technische Gerät (1) einen Klappmechanismus (11) aufweist, welcher mittels einer entsprechenden, mechanischen Sicherung gegen unbeabsichtigtes Öffnen und Schließen der Multimediamaus (1) gesichert ist.

12. Vorrichtung nach Anspruch 11, **dadurch gekennzeichnet, dass** das Unterteil (2) nach Entriegelung der mechanischen Sicherung im Klappmechanismus (11) in die Bewegungsrichtung "Öffnen" (5) oder in die Bewegungsrichtung "Schließen" (12) klappbar ist.

13. Vorrichtung nach Anspruch 12, **dadurch gekennzeichnet, dass** das Display (6) mittels eines Kontakts beim "Öffnen" oder beim "Schließen" des technischen Geräts (1) eingeschaltet beziehungsweise ausgeschaltet wird, wobei der Kontakt ebenfalls den an der Unterseite des Oberteils (3) angeordneten Bewegungssensor (14') und Fotosensor (15) ein- beziehungsweise ausschaltet und den an der unteren Oberfläche des Unterteils (2) angeordneten Bewegungssensor (14) entgegen der Schaltfunktion des Bewegungssensors (14') schaltet.

14. Vorrichtung nach Anspruch 10, **dadurch gekennzeichnet, dass** das Oberteil (3) ein seitlich angeordnetes Scrollrad (4) aufweist, welches Funktionen für eine bewegungssensitive Interaktion und Funktionen ausbildet.

15. Vorrichtung nach Anspruch 10, **dadurch gekennzeichnet, dass** die Unterseite des geöffneten Unterteils (2) und die Unterseite des geöffneten Oberteils (3) in deren Randbereichen ein gleitfähiges Material aufweisen, welches ein leichtes Gleiten des technischen Geräts (1) auf einer ebenen Fläche in ihrem geöffneten und geschlossenen Zustand ausbildet.

16. Vorrichtung nach Anspruch 10, **dadurch gekennzeichnet, dass** das technische Gerät (1) vorzugsweise als eine optische Multimediamaus (1) ausgebildet ist, welche über eine feste Verbindung oder per Funk mit einem PC verbunden ist.

## Claims

1. Method for performing a movement-sensitive interaction with a technical device (1) in the form of a multimedia mouse and/or a UMTS-enabled mobile telephone, wherein movements of the technical device (1) on a planar surface are detected by a movement sensor (14, 14') and converted to control information by means of integrated software, wherein the control information performs a direct movement-sensitive interaction with the technical device (1) which carries out visual menu control displayed on a display (6) and/or, by means of the display (6), visual navigation in documents or web pages with document and/or web content, wherein the technical device has a split housing which forms an upper portion (3) and a lower portion (2), wherein the lower portion (2) comprises the display (6), **characterised in that** on the underside of the device (1) is located a photosensor (15), **in that** the movement sensor (14, 14') is integrated in the photosensor (15), **in that** the movement sensor (14, 14') is activated only when the multimedia mouse is open, and **in that**, when the multimedia mouse (1) is passed over a document, the photosensor (15) detects the current image and displays it on the switched-on display, **in that** on the display (6) is displayed a mouse pointer (7) or crosshair of fixed position, wherein during a movement of the technical device the mouse pointer/crosshair (7) remains in a fixed position, while the picture on the display (6) is displaced according to the direction of movement, and **in that** confirmation of a selection from an open context menu or other functions is effected by means of a pressure sensor by pressing the technical device on a surface.

2. Method according to claim 1, **characterised in that** the movement-sensitive interaction during navigation displays a section of a document or webpage on a display (6), which section is displayed with corresponding displacement by the movement of the technical device.

3. Method according to claims 1 and 2, **characterised in that** the movement-sensitive interaction displays a context menu for the selection of different device functions on the display (6).

4. Method according to claims 1 to 3, **characterised in that** the movement-sensitive interaction displays a context menu for the selection of different device functions and/or processing functions of a displayed section of a document or web page on the display (6).

5. Method according to claims 1 to 4, **characterised in that** selection of functions in the context menu displayed or the processing functions of the displayed section of a document or web page is carried out by detection of a movement of the technical device.

6. Method according to claims 1 to 5, **characterised in that** the selection and performance of the functions in the context menu displayed and/or the processing functions of the detected and displayed picture section on the display (6) are effected by means of a combination of detection of movement and manual entry via a mounted keyboard.

7. Method according to claims 1 to 6, **characterised in that** manual selection and entry of functions in the movement-sensitive interaction with the technical device (1) are effected by means of mounted mouse buttons (9, 10) and/or a mounted scroll wheel (4).

8. Method according to claims 1 to 7, **characterised in that** manual selection and entry of functions in the movement-sensitive interaction with the technical device (1) are carried out by means of a mounted keyboard on or in the technical device.

9. Method according to claims 1 to 8, **characterised in that** the software for performing the movement-sensitive interaction is integrated in the technical device (1) and its functions are freely configurable by the operator.

10. Technical device (1) having means for performing a movement-sensitive interaction, wherein the technical device is designed as a multimedia mouse and/or a UMTS-enabled mobile telephone and has a movement sensor (14, 14') which detects movements of the technical device (1) on a planar surface and converts them to control information by means of integrated software, wherein the technical device has a split housing which forms an upper portion (3) and a lower portion (2), wherein the lower portion (2) comprises the display (6) which has a mouse pointer/crosshair (7) centrally on the axial longitudinal extent (13) of the technical device (1), and the upper portion (3) has at least two mouse buttons (9, 10) which perform functions for a movement-sensitive interaction and functions, **characterised in that** on the underside of the device (1) is located a photosensor (15), **in that** the movement sensor (14, 14') is integrated in the photosensor (15), **in that** the movement sensor (14, 14') is activated only when the multimedia mouse is open and designed in such a way that, when the multimedia mouse (1) is passed over a document, the photosensor (15) detects the current image and displays it on the switched-on display, **in that** on the display (6) is displayed a mouse pointer (7) or crosshair of fixed position, wherein during a movement of the technical device the mouse pointer/crosshair (7) remains in a fixed position, while the picture on the display (6) is displaced according to the direction of movement, and **in that** there is a pressure sensor which performs confirmation of a selection from an open context menu or other functions by pressing the technical device on a surface.

11. Apparatus according to claim 10, **characterised in that** the technical device (1) has a folding mechanism (11) which is protected against accidental opening and closing of the multimedia mouse (1) by means of a suitable mechanical lock.

12. Apparatus according to claim 11, **characterised in that**, after unlocking of the mechanical lock in the folding mechanism (11), the lower portion (2) can be folded in the "open" direction of movement (5) or in the "close" direction of movement (12).

13. Apparatus according to claim 12, **characterised in that** the display (6) is switched on or off by means of a contact upon "opening" or "closing" of the technical device (1), wherein the contact also switches on or off the movement sensor (14') and photosensor (15) mounted on the underside of the upper portion (3) and switches the movement sensor (14) mounted on the lower surface of the lower portion (2) in the opposite direction to the switching function of the movement sensor (14').

14. Apparatus according to claim 10, **characterised in that** the upper portion (3) has a laterally mounted scroll wheel (4) which performs functions for a movement-sensitive interaction and functions.

15. Apparatus according to claim 10, **characterised in that** the underside of the open lower portion (2) and the underside of the open upper portion (3) in the edge regions thereof have a slidable material which performs easy sliding of the technical device (1) on a planar surface in its open and closed state.

16. Apparatus according to claim 10, **characterised in that** the technical device (1) is preferably designed as an optical multimedia mouse (1) which is connected to a PC by a fixed connection or by wireless.

## Revendications

1. Procédé pour réaliser une interaction sensible au mouvement avec un appareil technique (1) sous la forme d'une souris multimédia et/ou d'un terminal mobile UMTS, étant précisé que les mouvements de l'appareil technique (1) sur une surface plane sont détectés par un capteur de mouvement (14, 14') et sont convertis à l'aide d'un logiciel intégré en informations de commande, que les informations de commande forment une interaction directe, sensible au mouvement, avec l'appareil technique (1), qui réalise une commande de menu visuelle représentée sur un affichage (6) et/ou une navigation visuelle, à l'aide de l'affichage (6), dans des documents ou des pages Internet avec des contenus de document et/ou web, que l'appareil technique comporte un boîtier divisé qui forme un élément supérieur (3) et un élément inférieur (2), et que l'élément inférieur (2) comprend l'affichage (6), **caractérisé**
**en ce qu'**un capteur photosensible (15) se trouve sur le côté inférieur de l'appareil (1),
**en ce que** le capteur de mouvement (14, 14') est intégré dans le capteur photosensible (15),
**en ce que** le capteur de mouvement (14, 14') est activé seulement quand la souris multimédia est ouverte,
et **en ce que** lorsqu'on passe la souris multimédia (1) sur un document, le capteur photosensible (15) détecte l'image actuelle et la représente sur l'affichage allumé,
**en ce qu'**un pointeur de souris (7) ou curseur en croix à position fixe est représenté sur l'affichage (6), étant précisé que lors d'un mouvement de l'appareil technique, le pointeur de souris/curseur en croix (7) reste dans une position fixe tandis que la représentation sur l'affichage (6) se déplace suivant le sens de mouvement,
et **en ce qu'**une confirmation de sélection d'un menu contextuel ouvert ou d'autres fonctions sont réalisées à l'aide d'un capteur de pression grâce à une pression de l'appareil technique sur une surface.

2. Procédé selon la revendication 1, **caractérisé en ce que** l'interaction sensible au mouvement représente sur un affichage (6), lors de la navigation, un détail d'un document ou d'une page web qui est représenté grâce au mouvement de l'appareil technique, avec un décalage correspondant.

3. Procédé selon la revendication 1 ou 2, **caractérisé en ce que** l'interaction sensible au mouvement représente sur l'affichage (6) un menu contextuel pour la sélection de différentes fonctions d'appareil.

4. Procédé selon les revendications 1 à 3, **caractérisé en ce que** l'interaction sensible au mouvement représente sur l'affichage (6) un menu contextuel pour la sélection de différentes fonctions d'appareil et/ou fonctions de traitement d'un détail représenté d'un document ou d'une page web.

5. Procédé selon les revendications 1 à 4, **caractérisé en ce que** la sélection de fonctions dans le menu contextuel représenté ou des fonctions de traitement du détail représenté d'un document ou d'une page web est réalisée à l'aide de la détection d'un mouvement de l'appareil technique.

6. Procédé selon les revendications 1 à 5, **caractérisé en ce que** la sélection et la réalisation des fonctions dans le menu contextuel représenté et/ou des fonctions de traitement du détail d'image détecté et représenté, sur l'affichage (6), se font à l'aide d'une combinaison de détection de mouvement et d'entrée manuelle par l'intermédiaire d'un clavier prévu.

7. Procédé selon les revendications 1 à 6, **caractérisé en ce que** la sélection et l'entrée manuelles de fonctions lors de l'interaction sensible au mouvement avec l'appareil technique (1) se font à l'aide de boutons de souris (9, 10) prévus et/ou d'une molette de défilement (4) prévue.

8. Procédé selon les revendications 1 à 7, **caractérisé en ce que** la sélection et l'entrée manuelles de fonctions lors de l'interaction sensible au mouvement avec l'appareil technique (1) se font à l'aide d'un clavier prévu, sur ou dans l'appareil technique.

9. Procédé selon les revendications 1 à 8, **caractérisé en ce que** le logiciel pour la réalisation de l'interaction sensible au mouvement est intégré dans l'appareil technique (1), et les fonctions de celui-ci sont aptes à être librement configurées par l'utilisateur.

10. Appareil technique (1) avec des dispositifs pour réaliser une interaction sensible au mouvement, étant précisé que l'appareil technique est conçu comme une souris multimédia et/ou un terminal mobile UMTS et comporte un capteur de mouvement (14, 14') qui détecte les mouvements de l'appareil technique (1) sur une surface plane et les convertit à l'aide d'un logiciel intégré en informations de commande, que l'appareil technique comporte un boîtier divisé qui forme un élément supérieur (3) et un élément inférieur (2), que l'élément inférieur (2) comprend l'affichage (6) qui présente un pointeur de souris/curseur en croix (7) de manière centrée sur l'extension longitudinale axiale (13) de l'appareil technique (1), et que l'élément supérieur (3) présente au moins deux boutons de souris (9, 10) qui forment les fonctions pour une interaction et des fonctions sensibles au mouvement, **caractérisé**
**en ce qu'**un capteur photosensible (15) se trouve sur le côté inférieur de l'appareil (1),
**en ce que** le capteur de mouvement (14, 14') est intégré dans le capteur photosensible (15),
**en ce que** le capteur de mouvement (14, 14') est activé seulement en présence d'une souris multimédia ouverte, conçue de telle sorte
que lorsqu'on passe la souris multimédia (1) sur un document, le capteur photosensible (15) détecte l'image actuelle et la représente sur l'affichage allumé,
**en ce qu'**un pointeur de souris (7) ou curseur en croix à position fixe est représenté sur l'affichage (6), étant précisé que lors d'un mouvement de l'appareil technique, le pointeur de souris/curseur en croix (7) reste dans une position fixe tandis que la représentation sur l'affichage (6) se déplace suivant le sens de mouvement,
et **en ce qu'**il est prévu un capteur de pression qui forme une confirmation de sélection d'un menu contextuel ouvert ou d'autres fonctions, grâce à une pression de l'appareil technique sur une surface.

11. Dispositif selon la revendication 10, **caractérisé en ce que** l'appareil technique (1) comporte un mécanisme de rabattement (11) qui est protégé à l'aide d'une protection mécanique appropriée à l'encontre d'une ouverture et d'une fermeture involontaires de la souris multimédia (1).

12. Dispositif selon la revendication 11, **caractérisé en ce que** l'élément inférieur (2), après déverrouillage de la protection mécanique dans le mécanisme de rabattement (11), est apte à pivoter dans le sens de mouvement "ouverture" (5) ou dans le sens de mouvement "fermeture" (12).

13. Dispositif selon la revendication 12, **caractérisé en ce que** l'affichage (6) est mis en marche ou arrêté à l'aide d'un contact lors de l"ouverture" ou de la "fermeture" de l'appareil technique (1), respectivement, étant précisé que le contact met en marche ou arrête également, respectivement, le capteur de mouvement (14') et le capteur photosensible (15) disposés sur le côté inférieur de l'élément supérieur (3), et commande le capteur de mouvement (14) disposé sur la surface inférieure de l'élément inférieur (2) à l'encontre de la fonction de commande du capteur de mouvement (14').

14. Dispositif selon la revendication 10, **caractérisé en ce que** l'élément supérieur (3) comporte une molette (4), disposée sur le côté, qui forme les fonctions pour une interaction et des fonctions sensibles au mouvement.

15. Dispositif selon la revendication 10, **caractérisé en ce que** le côté inférieur de l'élément inférieur (2) ouvert et le côté inférieur de l'élément supérieur (3) ouvert présentent dans la zone de leurs bords un matériau apte à glisser qui permet un glissement facile de l'appareil technique (1) sur une surface plane dans leur état ouvert et fermé.

16. Dispositif selon la revendication 10, **caractérisé en ce que** l'appareil technique (1) est conçu de préférence comme une souris multimédia optique (1) qui est reliée à un PC par une liaison fixe ou par radio.
